# EUROPEAN PATENT SPECIFICATION

(11) **EP 0 659 853 B1**
(45) Date of publication and mention of the grant of the patent: **01.04.1998**
(21) Application number: 94119007.6
(22) Date of filing: 02.12.1994
(51) Int. Cl.: C09D 127/12, C09D 179/08, B05D 7/00, C09D 181/06

(54) **Rollable antistick water paint coating for aluminium cookware and procedure for its application**
Per Rollverfahren auftragbare, wässrige Antihaftbeschichtung für Aluminium-Kochgeschirr und Verfahren zu ihrem Auftragen
Revêtement de peinture aqueuse antiadhésive applicable au rouleau pour poêle en aluminium et procédé de son application

(30) Priority: 27.12.1993 IT MI932740
(43) Date of publication of application: 28.06.1995
(73) Proprietor: LAMBDA S.r.l., I-20070 Fombio (Prov. of Milan) (IT)
(72) Inventor: Bignami, Claudio, I-20071 Casalpusterlengo (Milan) (IT)
(74) Representative: Gervasi, Gemma, Dr.

(56) References cited:
- DE-A- 2 755 364
- FR-A- 2 319 696

## Description

### Field of the invention

The present invention relates to rollable water paints for the antistick coating of aluminium cookware and procedure for their application.

The term "cookware" is used herein to mean pots and relevant lids, pans, baking pans, oven trays, toaster or oven racks, kitchen utensils, spatulas, mixing spoons, and all other utensils usually employed for food preparation and cooking.

### State of the art

The use of non-stick cookware has extraordinarily increased during the last 30 years. Consequently, studies have been and are-still being conducted to develop non-stick paint formulations and relevant methods of application to the pot and pan surface coming into contact with food.

Several materials are suitable for cookware production, but non-stick coated pans and pots are mainly made of aluminium.

Particularly successful non-stick water paints are based on fluorinated polymers (PTFE).

With a view to overcoming the difficulty of non-sticking water paints based on PTFE to metal surfaces, several methods for the treatment of said surfaces before paint application, e.g. simple degreasing or pickling or sand-blasting, have been studied. Furthermore, very many formulations based on PTFE combined with other components to be laid on the metal surface in a single application or with more coats, each coat preferably being of a different composition, were developed.

For example. a particularly effective way of pickling an aluminium surface for non-stick paint application is disclosed in Italian patent No. 1,226,347 by the Applicant.

The use of ternary mixtures based on PTFE, polyarylene sulphide resins (PAS), in particular polyphenylene sulphide (PPS), and polyamido-imidic (PAI) and/or polyimidic resins (PI), for the preparation of water paints exhibiting improved surface strength and adhesion to supports is described in DE 2.755.364. This document teaches the use of polyimidic (or polyamido-imidic) resin in amounts comprised in very large range namely from 5 to 0.33 parts by weight per part of polyphenylene sulfide.

A composition containing PTFE, colloidal silica, a polyamide aminic salt, a coalescence agent, and mica particles at appropriate ratios meant for improving the adhesion of PTFE to the metal substrate is described in British patent No. GB 1,565,842.

A formulation comprising PAI or polyethersulphonic resins (PES) combined with at least two different types of PTFE of very different viscosities on melting, which stratifies in a first layer on the metal, with PTFE being mainly concentrated in the external part of the paint layer, is described in U.S. patent No. 5,168,013.

A water paint without PTFE, containing a surfactant, thin silica particles, a polyethersulphone (PES) or polyamido-imidic resin (PAI) for application to a degreased metal substrate, and acting as a bridge with the successive PTFE-based paint layer is disclosed in U.S. patents No. 5,049,437 and No. 5,079,073.

A method for the preparation of an aluminium sheet previously sandblasted and coated with three layers of PTFE-based paint is described in U.S. patent No. 4,818,350. Said paints were found to be unfit for rolling.

In spite of the wealth of formulations and applicative methods disclosed in the prior art, there is an urgent need for improving the adhesion of PTFE-based non-stick coatings to metal substrates, using simple and high-yield techniques.

A procedure for rolling a non-stick coating on metal disks to be shaped into cookware for household use is disclosed in Italian patent No. 1,226,348 by the Applicant. Rolling offers several advantages over spraying: it does not disperse polluting aerosols in workroom environments and allows larger production volumes. Conversely, the coatings obtained show an inferior aspect, in particular as far as the outer surface gloss is concerned.

The Applicant, in copending European patent application EP-A-607934 discloses some water paint formulations based on PTFE, PPS, and PAI that may be applied to simply degreased aluminium disks before their shaping into pots and pans.

### Technical problem

As concerns the shaping of a painted aluminium disk, the flexibility of the paint layer must be such that no formation of scalings and checkings takes place during shaping.

Since cookware meant for household use needs be most appealing, its aspect is very important from a marketing viewpoint. Satisfactory solutions must therefore be found even in case of simple and low-cost industrial techniques, such as rolling followed by painted metal disks shaping.

As already mentioned, this is a major problem for cookware manufacturers and every improvement, though seemingly trifling, is considered an important and highly valued result.

### Detailed description of the invention

Subsequent research conducted by the Applicant provided evidence that non-stick cookware can be obtained by rolling superimposed layers of particular PTFE-based aqueous paints according to a well defined operating technique, which proves to be as high in quality as the cookware obtained by spraying.

According to a basic feature of the present invention, the water paints that may be rolled on aluminium disks to provide a non-stick coating before their being machine moulded into cookware, consist of aqueous dispersions containing PTFE, PPS, carbon black and PAI mixtures with a PAI content of 5% to 10% by wt. and a carbon black content of 10% to 15% by wt.

The PAI and carbon black per cent amounts are herein referred to PTFE + PPS + PAI as a whole.

A water paint based on PTFE and PPS in a ratio of 35:65 to 80:20 w/w (by w.), with a PAI or PI content below 10%, a water content of 65% to 40%, and a carbon black content of 10% to 15%, can be rolled on metal surfaces simply degreased with formation of tough films, which may be drawn even deeply without formation of crackings and may be easily coated, after drying, with other water paint layers, always based on PTFE, but not containing PPS and carbon black.

Evidence was provided that, should the first water paint layer applied to the metal surface have a PAI or PI content exceeding 10%, the flexibility of the film that will form after paint drying will not be sufficient to hinder the formation of checkings in said film during metal sheet drawing into cookware. Said checkings, though masked by the superimposed paint layers, make the coating durability shorter and facilitate the formation of food spots in its deep layers, thus causing a considerable worsening of the aesthetic characteristics of the coated article.

Furthermore, since PAI is usually available in solution with N-methylpyrrolidone, the presence of a large amount of PAI and, consequently, of solvent in the aqueous formulations makes the drying of painted aluminium disks harder.

The presence of high per cent amounts of carbon black is of great importance: surprisingly, it facilitates film formation during paint drying and hinders the interpenetration of the superimposed paint layers into the layer directly in contact with the aluminium surface, whose adhesiveness is thus protected.

As far as the Applicant knows, said property of carbon black, i.e. its favouring film formation especially in formulations containing substances that may be hardly obtained in the form of films such as PTFE and PPS, has never been observed and described heretofore.

The carbon black content of the paint is a very critical factor. Adhesion to the aluminium surface rapidly worsens as the carbon black content lowers below 10% of PTFE + PPS + PAI. A carbon black content exceeding 15% brings about the so-called critical concentration of the pigment volume, i.e. the pigment can no longer be adequately incorporated in the binding composition. Should the carbon black content exceed 15%, the coating will exhibit a decreased chemical resistance and blister formation by simple immersion in boiling water.

Considering that the best non-stick coatings are obtained with PTFE-based paints not containing other resins, in the preferred embodiments of the present invention the paint layer in contact with the aluminium surface is overlaid with another layer of paint based on PTFE, without mixing PTFE with PPS and PAI.

In fact, the research conducted provide evidence that the paint film in contact with the aluminium surface secures not only a coating with the adhesiveness and flexibility required by drawing, but also a perfect adhesion both to the aluminium surface and to the paint superficial layer, even if this contains PTFE only.

In a more preferred embodiment of the present invention, a first layer of paint containing PTFE and PPS in a ratio ranging between 35:65 and 55:45 w/w is applied, dried, and overlaid with a second layer containing PTFE and PPS in a ratio ranging between 55:45 and 80:20 w/w so as to obtain a layer of intermediate characteristics (and therefore acting as a bridge) between those of the layer in contact with the aluminum disk and of the outer layer.

The water paint applied according to the present invention secures an excellent covering of a metal (in particular aluminium) surface after simple degreasing. The coating that forms has such tenacity and flexibility that it can withstand, without crackings or checkings, the drawing required for painted metal disks shaping into cookware.

After application of each layer, the paint is air dried slowly to evaporate the water and solvents, if any, present therein. Once all layers have been applied, the coated surface is heated to a temperature of 400°C to 430°C for a period of 5 to 2 min. to obtain a complete coating fusion.

The paints are rolled on the aluminium disks to be drawn in such amounts as to form coatings which, when dry, are 2 to 10 µm thick, preferably 5 µm, in the two first layers, and 5 to 20 µm thick, preferably 10 µm, in the third layer.

The water paints of the present invention allow the painting of aluminium disks suitable for drawing into cookware, said paint film having higher flexibility properties than the aluminium of the support.

In the present invention, the painting procedure typically comprises the steps of:
a) degreasing the aluminium disk to be drawn into cookware by alkaline treatment at 30 to 50°C;
b) rolling a first layer of water paint containing PTFE and PPS in a ratio ranging between 35:65 and 55:45 w/w, PAI or PI (10% max.), water (65% to 40% by wt.), and carbon black (10% to 15%);
c) hot-air drying (at 120°C max.) of the layer until no aftertack to the touch;
d) rolling a second water paint layer as per step b), except that the ratio of PTFE to PPS ranges between 55:45 and 80:20 w/w;
e) hot-air drying (at 120°C max.) of the layer until no aftertack to the touch;
f) rolling a third water paint layer based on PTFE and not containing PPS and PAI;
g) hot-air drying (at 120°C max.) of the layer until no aftertack to the touch;
h) heat treatment of the disk provided with three dried paint layers, at a temperature of 400°C to 430°C for a period of 5 to 2 minutes.

Steps b) and c), d) and e), f) and g) may be repeated, if so required, by causing the disk to pass under the paint roll unit several times, each time providing a paint layer of 5 µm max., until obtaining a paint layer of the desired overall thickness.

The procedure under the invention is preferably of continuous and in-line type, with a 6 to 20 m/min speed of the belt transferring aluminium disks to painting.

The cookware obtained by drawing aluminium disks after painting as per the procedure of this invention exhibits a coating as high in quality as that of analogous cookware painted by spraying, after moulding and sand-blasting of the aluminium disk.

The following examples are conveyed further to illustrate some preferred embodiments of the present invention.

### Examples 1-6

### PAINTS PREPARATION

The water paints tested were prepared from products available under the following trademarks:
- Algoflon D 60, from Montefluos S.p.A.: 58% by wt. PTFE water dispersions;
- Rhodeftal 200, from Rhône Poulenc: 30% by wt. PAI solutions in N-methylpyrrolidone. Prior to use, Rhodeftal had been treated for 96 hrs with dimethylethanolamine (DMEA) in a steatite ball mill to make PAI soluble in water.
- Fortron X 0205/60, from Hoechst: PPS in powder.
- Collacrat PU 85, from BASF: thickener (ethoxylated urethane).
- Rhoplex AC 61, from Rohm and Haas: 45% by wt. acrylic resin water dispersion.
- Printex 85, from Degussa: carbon black.

In addition to PTFE, PPS, PAI, and carbon black, the mixtures were added with 3.2% ethoxylated nonylphenol (antisettling agent), 2% ethylene glycol monomethyl ether (homogenizer), 6.7% ethoxylated urethane (thickener), and 3.2% of a 45% by wt. acrylic resin water dispersion (film forming additive).

The solution of PAI in N-methylpyrrolidone was treated with dimethylethanolamine to solubilize same in water. Said treatment was carried out in a steatite ball mill for a period of 4 days. The clear to slightly milky solution obtained was used in paint formulation.

Also PPS, before being used in paint formulation, was milled in the presence of water in a steatite ball mill for a period of 72 hrs to obtain a homogeneous dispersion including solid particles sized 8 µm max.

The water paints of this invention were prepared by mixing the various components (in addition to the components pretreated as described above) in a steatite ball mill for a period of 72 to 96 hrs. A perfect homogenization of the mixture and a lowering in the solid particle size below 8 µm were thus secured.

The composition of the tested paints is reported in Table 1 below.

**Table 1**

| Example No. | 1 | 2 | 3 | 4 | 5 | 6 |
|---|---|---|---|---|---|---|
| Algoflon D60 | 15.2 | 19.6 | 15.2 | 15.2 | 15.1 | 23.9 |
| Fortron X | 13.1 | 11.4 | 13.1 | 13.1 | 13.1 | 9.7 |
| Rhodeftal 200 | 5.5 | 5.5 | 5.5 | 5.5 | 11.2 | 5.5 |
| DMEA | 0.7 | 0.7 | 0.7 | 0.6 | 1.3 | 0.7 |
| Printex 85 | 3.5 | 3.5 | 3.0 | 1.2 | 3.5 | 3.5 |
| Antisettling a. | 3.2 | 3.2 | 3.2 | 3.2 | 3.2 | 3.2 |
| Homogenizer | 2.0 | 2.0 | 2.0 | 1.9 | 3.9 | 2.0 |
| Thickener | 6.7 | 6.7 | 6.7 | 6.7 | 6.7 | 6.7 |
| Acrylic res. | 3.2 | 3.2 | 3.2 | 3.2 | 3.2 | 3.2 |
| Others | 6.9 | 6.0 | 6.9 | 6.9 | 6.9 | 5.0 |
| Water | 40.0 | 38.2 | 40.5 | 42.5 | 31.9 | 36.6 |
| Remark: The term "Others" indicates various chemical compounds (thickeners, dispersing agents, surfactants) present in the formulations available under the aforementioned trademarks. | | | | | | |

### Example 7-11

The apparatus used for continuous application of water paints to aluminium disks to be shaped into cookware consisted of four roll units, each of the first three roll units being followed by a hot-air tunnel for painted disks drying and the fourth by a small heater for disks final drying and baking. Disks were placed on a conveyor belt and transferred from one roll unit to the other.

Before painting, the aluminium disks were degreased with a hot (30-50°C) 0.5% by wt. sodium hydroxide solution. Disks were then painted without being subjected to pickling.

The conveyor belt speed was set to secure no aftertack to the touch of the painted disks after drying.

The disks painted with the aforesaid apparatus were made of aluminium sheet, type 1050 (99.5% aluminium), which had been degreased and had a surface texture index number (Ra) below 1.2 µm. The texture index number is given by the ratio of the integral of the surface microcavities to the range of integration.

The first and the second roll units were set to secure a paint layer to be 5 µm thick (after drying).

The air temperature in the first three tunnels was set to 70°C and the residence time of the painted disks in each tunnel was of 5 minutes. The temperature of the last heater was set to obtain a 5 minutes' disks baking at 420°C.

The third roll unit was set to secure a paint layer 5 µm thick (after drying).

Painted aluminium disks were subjected to paint-to-support adhesion tests according to ISO 2409 and to drawing tests according to ISO 1520.

Several paintings of aluminium disks were carried out by the apparatus and according to the method described above. In particular, examples 7 to 11 were obtained as follows: the first roll unit was fed with the paints of examples 1, 2, 3, 4, and 5; the second roll unit with the paint of example 6, and the third roll unit with the paint of example 1, but without PPS and PAI.

The aluminium disks painted and drawn at different depths were subjected to adhesion test as per ISO 1520 and to peeling test as per ISO 2409.

The results obtained are shown in Table 2.

**Table 2**

| Adhesion and peeling tests | | | | | |
|---|---|---|---|---|---|
| Example No. | 7 | 8 | 9 | 10 | 11 |
| 4.0 mm | no | no | no | ** | no |
| peeling | (+) | (-) | (+) | -- | (+) |
| | | | | | |
| 4.5 mm | no | no | no | -- | no |
| peeling | (+) | (-) | (+) | -- | (+) |
| | | | | | |
| 5.0 mm | no | no | no | -- | no |
| peeling | (+) | (-) | (+) | -- | (+) |
| | | | | | |
| 5.5 mm | no | no | no | -- | no |
| peeling | (+) | (-) | (+) | -- | (+) |
| | | | | | |
| 6.0 mm | no | no | no | -- | no |
| peeling | (+) | (-) | (+) | -- | (+) |
| | | | | | |
| 6.5 mm | no | no | no | -- | no |
| peeling | (+) | (-) | (+) | -- | (+) |
| | | | | | |
| 7.0 mm | no | no | no | -- | yes |
| peeling | (+) | (-) | (+) | -- | (+) |
| | | | | | |
| 7.5 mm | no | no | no | -- | yes |
| peeling | (+) | (-) | (+) | -- | (+) |
| | | | | | |
| 8.0 mm | no | no | no | -- | yes |
| peeling | (+) | (-) | (+) | -- | (+) |
| Remarks: | | | | | |
| (1) Crackings and checkings, if any, on the surface of painted and drawn disks are observed. | | | | | |
| (2) Peeling below 1 mm is considered positive (+); it is negative in all other cases. | | | | | |
| (3) ** Painted disks of example 10 show evident blisters on leaving the baking heater after the third roll unit; therefore, they have not been subjected to the various tests. | | | | | |

### Examples 12-21

Using the same apparatus and procedure as per examples 7-11, a series of painting tests was carried out, in which the first roll unit was fed with the paint of example 1, but at PPS/PTFE/PAI ratios modified as shown in Table 3, to evaluate the influence of the PAI content on the final coating characteristics.

The painted disks were subjected to a 6 mm deep drawing test according to ISO 1520 and to a peeling test (after drawing) according to ISO 2409.

The results obtained are shown in Table 3.

**Table 3**

| Tests on PAI content variation | | | | |
|---|---|---|---|---|
| Example No. | PPS-PTFE-PAI ratio | Drawing 6 mm | Peeling | No aftertack |
| 12 | 60:40:0 | no | (+) | insufficient |
| 13 | 59:39:2 | no | (+) | sufficient |
| 14 | 57:38:5 | no | (+) | sufficient |
| 15 | 56:37:7 | no | (+) | good |
| 16 | 54:36:10 | no | (+) | good |
| 17 | 51:34:15 | yes | (+) | sufficient |
| 18 | 48:32:20 | yes | (+) | sufficient |
| 19 | 45:30:25 | yes | (-) | insufficient |
| 20 | 45-28-30 | yes | (-) | insufficient |
| 21 | 39:26:35 | yes | (-) | insufficient |
| Remarks: | | | | |
| (1) Crackings and checkings, if any, on the surface of painted and drawn disks are observed. | | | | |
| (2) Peeling below 1 mm is considered positive (+); it is negative in all other cases. | | | | |
| (3) No aftertack is considered "insufficient" if the painted disks lose tackiness after a 15-sec. min. residence time under forced air stream at 90°C; "good" after a 9-sec. max. residence time; "sufficient" after a 9 to 15-sec. residence time. | | | | |

## Claims

1. Rollable water paint for aluminium disks consisting of aqueous dispersion containing mixtures of polytetrafluoroethylene (PTFE), polyphenylene sulphide (PPS), polyamido-imidic resin (PAI) and carbon black, characterized in that the PAI content ranges between 5% and 10% by weight and the carbon black content ranges between 10% and 15% by weight referred to PTFE + PPS + PAI as a whole and further the ratio by weight (by w.) of PTFE to PPS ranges between 35:65 and 80:20 and the water content ranges between 40% and 65% by weight.

2. The water paint according to claim 1 wherein the ratio by w. of PTFE to PPS ranges between 35:65 and 55:45.

3. The water paint according to claim 1 wherein the ratio by w. of PTFE to PPS ranges between 55:45 and 80:20.

4. Procedure for painting aluminium disks to be drawn into cookware characterized in that it comprises the steps of:
a) degreasing the aluminium disk to be drawn into cookware by alkaline treatment at 30 to 50°C;
b) rolling a first layer of water paint according to claim 2;
c) hot-air drying (at 120°C max.) of the layer until no aftertack to the touch;
d) rolling a second water paint layer as per step b), except that water paint is according to claim 3;
e) hot-air drying (at 120°C max.) of the layer until no aftertack to the touch;
f) rolling a third water paint layer based on PTFE and not containing PPS and PAI;
g) hot-air drying (at 120°C max.) of the layer until no aftertack to the touch;
h) heat treatment of the disk provided with three dried paint layers, at a temperature of 400°C to 430°C for a period of 5 to 2 minutes.

5. The procedure of painting according to claim 4 characterized in that in the steps b) and d) the amount of paint is rolled so that each paint layer has a thickness (after drying) of 2-10 µm and in step f) the amount of paint is rolled so that a paint layer has a thickness of 5-20 µm.

6. The procedure of painting according to claim 4 characterized in that in step b) and d) the thickness of each layer is 5 µm and in step f) the paint layer is 10 µm.

7. The procedure of painting according to claim 4 characterized in that it is carried out in continuous and in-line with a 6 to 20 m/min. speed of the belt transferring aluminium disks to painting.

8. The procedure of painting according to claim 4 characterized in that the steps b) and c), d) and e), f) and g) are repeated, if so required, by causing the disk to pass under the paint roll unit several times, each time providing a paint layer of 5 µm max. to obtain a layer of the desired thickness.

## Patentansprüche

1. Per Rollverfahren auftragbare, wässriges Anstrichmittel für Aluminiumscheiben, bestehend aus wässriger Dispersion, enthaltend Mischungen aus Polytetrafluorethylen (PTFE), Polyphenylensulfid (PPS), Polyamidoimid-Harz (PAI) und Ruß, dadurch **gekennzeichnet,** daß der PAI-Gehalt im Bereich von 5 bis 10 Gew.-% und der Rußgehalt im Bereich von 10 bis 15 Gew.-%, der als Ganzes als PTFE+PPS+PAI bezeichnet wird, liegen und außerdem das Gewichtsverhältnis von PTFE zu PPS im Bereich von 35:65 und 80:20 und der Wassergehalt zwischen 40 und 65 Gew.-% liegen.

2. Wässriges Anstrichmittel gemäß Anspruch 1, worin das Gewichtsverhältnis von PTFE zu PPS im Bereich von 35:65 ind 55:45 liegt.

3. Wässriges Anstrichmittel gemäß Anspruch 1, worin das Gewichtsverhältnis von PTFE zu PPS im Bereich von 55:45 und 80:20 liegt.

4. Verfahren zum Anstrich von Aluminiumscheiben, die in Kochgeschirr gezogen werden, dadurch **gekennzeichnet**, daß es die folgenden Schritte umfaßt:
a) Entfetten der Aluminiumscheibe, die durch alkalische Behandlung bei 30 bis 50°C in das Kochgeschirr eingezogen wird;
b) Rollen einer ersten Schicht des wässrigen Anstrichmittel, das PTFE und PPS in einem Verhältnis im Bereich von 35:65 und 55:45 v/v, PAI oder PI (10 % max.), Wasser (65 bis 40 Gew.-%) und Ruß (10 bis 15 %) enthält;
c) Heißlufttrocknen (bei 120°C max.) der Schicht bis bei Berührung kein Nachkleben zurückbleibt;
d) Rollen einer zweiten wässrigen Anstrichschicht wie in Schritt b), außer daß das Verhältnis von PTFE zu PPA im Bereich von 55:45 und 80:20 v/v liegt;
e) Heißtrocknen (bei 120°C max.) der Schicht bis bei Berührung kein Nachkleben zurückbleibt;
f) Rollen einer auf PTFE basierenden und kein PPS und PAI enthaltenden dritten wässrigen Anstrichsschicht;
g) Heißlufttrocknen (bei 120°C max.) der Schicht bis bei Berührung kein Nachkleben zurückbleibt;
h) Wärmebehandlung der Scheibe, die mit den drei getrockneten Anstrichschichten ausgestattet ist, bei einer Temperatur von 400°C bis 430°C für einen Zeitraum von 5 bis 2 Minuten.

5. Verfahren zum Anstrich gemäß Anspruch 4, dadurch **gekennzeichnet**, daß in den Schritten b) und d) die Menge des Anstrichmittels so gerollt wird, daß jede Anstrichschicht eine Dicke (nach dem Trocknen) von 2 bis 10 µm besitzt und in Schritt f) die Menge des Anstrichmittel so gerollt wird, daß die Anstrichschicht eine Dicke von 5 bis 20 µm besitzt.

6. Verfahren zum Anstrich gemäß Anspruch 4, dadurch **gekennzeichnet,** daß in den Schritten b) und d) die Dicke jeder Schicht 5 µm ist und in Schritt f) die Anstrichschicht 10 µm ist.

7. Verfahren zum Anstrich gemäß Anspruch 4, dadurch **gekennzeichnet**, daß es kontinuierlich und der Reihe nach durchgeführt wird mit einer 6 bis 20 m/min Fließbandgeschwindigkeit, bei der die Aluminiumscheiben zum Anstrich geführt werden.

8. Verfahren zum Anstrich gemäß Anspruch 4, dadurch **gekennzeichnet,** daß die Schritte b) und c), d) und e), f) und g), sofern notwendig, wiederholt werden, indem man die Scheibe mehrmals unter der Anstrichrolleinheit hindurchführt, wobei jedes Mal eine Anstrichschicht von max. 5 µm erhalten wird, um eine Schicht der gewünschten Dicke zu erhalten.

## Revendications

1. Peinture à l'eau applicable au rouleau pour des disques d'aluminium composée d'une dispersion aqueuse contenant des mélanges de polytétrafluoréthylène (PTFE), de sulfure de polyphénylène (PPS), de résine polyamido-imidique (PAI) et de noir de carbone, caractérisée en ce que la teneur en PAI est comprise entre 5 % et 10 % en poids et la teneur en noir de carbone est comprise entre 10 % et 15 % en poids par rapport à l'ensemble PTFE + PPS + PAI et en ce qu'en outre le rapport en poids du PTFE au PPS est compris entre 35:65 et 80:20 et la teneur en eau est comprise entre 40 % et 65 % en poids.

2. Peinture à l'eau selon la revendication 1, dans laquelle le rapport en poids du PTFE au PPS est compris entre 35:65 et 55:45.

3. Peinture à l'eau selon la revendication 1, dans laquelle le rapport en poids du PFTE au PPS est compris entre 55:45 et 80:20.

4. Procédé pour peindre des disques d'aluminium destinés à être étirés en ustensiles de cuisine caractérisé en ce qu'il comprend les étapes consistant à :
a) dégraisser le disque d'aluminium destiné à être étiré en ustensile de cuisine par traitement alcalin à 30 à 50°C ;
b) appliquer au rouleau une première couche de peinture à l'eau selon la revendication 2 ;
c) sécher à l'air chaud (à 120°C au maximum) la couche jusqu'à ce qu'elle ne présente plus de post-adhésivité au toucher ;
d) appliquer au rouleau une deuxième couche de peinture à l'eau comme à l'étape b), sauf que la peinture à l'eau est selon la revendication 3 ;
e) sécher à l'air chaud (à 120°C au maximum) la couche jusqu'à ce qu'elle ne présente plus de post-adhésivité au toucher ;
f) appliquer au rouleau une troisième couche de peinture à l'eau à base de PTFE et ne contenant pas de PPS et de PAI ;
g) sécher à l'air chaud (à 120°C au maximum) la couche jusqu'à ce qu'elle ne présente plus de post-adhésivité au toucher ;
h) soumettre le disque pourvu de trois couches de peinture séchées à un traitement thermique, à une température comprise entre 400°C et 430°C pendant une durée de 5 à 2 minutes.

5. Procédé de peinture selon la revendication 4, caractérisé en ce qu'aux étapes b) et d) la quantité de peinture est appliquée au rouleau de manière à ce que chaque couche de peinture ait une épaisseur (après séchage) de 2 à 10 µm, et en ce qu'à l'étape f) la quantité de peinture est appliquée au rouleau de manière à ce que la couche de peinture ait une épaisseur de 5 à 20 µm.

6. Procédé de peinture selon la revendication 4, caractérisé en ce qu'aux étapes b) et d) l'épaisseur de chaque couche est de 5 µm et en ce qu'à l'étape f) la couche de peinture est de 10 µm.

7. Procédé de peinture selon la revendication 4, caractérisé en ce qu'il est mis en oeuvre en continu et en ligne avec une vitesse de 6 à 20 m/mn animant la bande transportant les disques d'aluminium à peindre.

8. Procédé de peinture selon la revendication 4, caractérisé en ce que les étapes b) et c), d) et e), f) et g) sont répétées, si nécessaire, en faisant passer le disque sous l'unité de rouleau de peinture plusieurs fois, chaque passage formant une couche de peinture de 5 µm au maximum afin d'obtenir une couche de l'épaisseur souhaitée.
